# EUROPÄISCHE PATENTSCHRIFT

(11) **EP 1 619 462 B1**
(45) Veröffentlichungstag und Bekanntmachung des Hinweises auf die Patenterteilung: **07.11.2007**
(21) Anmeldenummer: 05014821.2
(22) Anmeldetag: 08.07.2005
(51) Int. Cl.: F42C 17/04

(54) **Programmiereinrichtung für Artilleriemunition mit Korrekturzünder**
Programming device for artillery munition with correction fuze
Dispositif de programmation pour des munitions d'artillerie avec fusée de correction

(30) Priorität: 23.07.2004 DE 102004036003
(43) Veröffentlichungstag der Anmeldung: 25.01.2006
(73) Patentinhaber: Diehl BGT Defence GmbH & Co.KG, 88662 Überlingen (DE)
(72) Erfinder: Weller, Bernhard, 90607 Rückersdorf (DE); Koch, Volker, 90607 Rückersdorf (DE); Kautzsch, Karl, 90596 Schwanstetten (DE)
(74) Vertreter: Diehl Patentabteilung

(56) Entgegenhaltungen:
- EP-A- 0 265 815
- DE-A1- 10 236 157
- US-A- 4 327 625
- US-A1- 2003 221 546

## Beschreibung

Wie in der DE 100 23 345 A apparativ und in der DE 199 57 363 A funktional näher ausgeführt, dient der so genannte Korrekturzünder einer Erhöhung der Treffergenauigkeit infolge Verringerung der Längsstreuung von ballistisch verbrachter Artilleriemunition, indem bei Erreichen eines vorgegebenen Bahnpunktes eine in den Korrekturzünder integrierte aerodynamische Bremseinrichtung freigegeben und dadurch das Geschoß in eine steilere Abstiegsbahn auf den Zielpunkt zu umgesteuert wird. Dazu verfügt der Korrekturzünder über z.B. herausklappbare Mantelsegmente oder einen fliehkraftbedingt radial ausstellbaren Textilring. Gemäß DE 198 24 288 A befindet sich ferner im Korrekturzünder eine Antenne für die Satellitennavigation. Der funktionskritische Bremseinsatzpunkt auf der tatsächlich geflogenen ballistischen Bahn wird zweckmäßiger Weise durch Vergleich aktuell ermittelter Bahndaten mit vorgegebenen Bahnkriterien bestimmt, wobei die Information über die aktuelle Flugbahn im Wege der Satellitennavigation im Korrekturzünder selbst gewonnen wird. Dadurch kann eingeführte Artilleriemunition wahlweise mit einem herkömmlichen Abstandszünder oder mit einem Korrekturzünder ausgestattet und verschossen werden.

Eine satellitengestützte Bahnbestimmung für den Korrekturzünderbetrieb ist allerdings überaus zeitaufwendig im Verhältnis zu der kurzen zur Verfügung stehenden Rechenzeit während der Eingriffsmöglichkeiten in den Ablauf des Fluges, um das Projektil rechtzeitig abzubremsen, da für die Satellitennavigation mehrere Navigationssatelliten über dem Horizont erfasst und hinsichtlich ihrer momentanen Bahndaten ausgewertet werden müssen. Solch eine Bestimmung aufeinander folgender Positionen längs der geflogenen Bahn kann jedoch maßgeblich beschleunigt werden, wenn dem Navigationsrechner des Korrekturzünders unmittelbar vor Abschuss der Munition schon möglichst viele Prädiktionsdaten zur Ortsbestimmung über die Satellitennavigation als Initialisierungsinformation mitgegeben werden. Um aktuell zu sein, kann diese Datenvorgabe also noch nicht im Magazin erfolgen, sondern sie muss in engem zeitlichen Zusammenhang mit dem Tempieren (dem Einstellen des Zündabstandes relativ zum Geschützt oder relativ zum Zielpunkt) unmittelbar vor Abschuss der Munition geschehen, um die erforderliche Rechenzeit für die Bahnbestimmung an Bord tatsächlich spürbar reduzieren zu können. Die zur Übermittlung von Navigationsinformationen für mehrere Satelliten kurzfristig erforderliche Datenrate ist allerdings viel zu hoch, um sie über die zur Vorgabe der Tempierinformation eingeführte induktive Koppelspule der Programmiereinrichtung im Ladesystem abwickeln zu können.

Aus der DE 102 36 157A1 ist ein programmierbarer Artilleriezünder bekannt, bei dem gewöhnliche Tempierdaten induktiv und gleichzeitig GPS-Initialisierungsdaten optoelektronisch übertragen werden.

Die US 2003/221 546A1 beschreibt eine Artilleriemunition, bei der die Missionsdaten GPS-Informationen enthalten können. Die Übertragung von GPS-Initialisierungsdaten erfolgt durch ein Interface, bei dem es sich um ein induktives Interface handeln kann.

Der Erfindung liegt die technische Problemstellung zugrunde, in das Feuerleitsystem für Artilleriemunition eine Programmiereinrichtung zum Initialisieren der Satellitennavigation für die Korrekturzünderfunktion einzubeziehen.

Diese Aufgabe ist erfindungsgemäß durch die im Hauptanspruch angegebene Merkmalskombination gelöst. Danach wird die herkömmliche induktive Übermittlung der Tempierinformation im Zuge des Ladevorganges vollständig beibehalten, so dass ein Verbringen eingeführter Artilleriemunition mit konventionellem Zeit- oder Abstandszünder unter Verwendung der vorhandenen Schusstafeln unbeeinträchtigt möglich bleibt. Zusätzlich ist ein Hochgeschwindigkeitsprogrammiergerät neben dem eingeführten Tempierungs-Programmiergerät eingeführt, um momentane Initialisierungsdaten für die Satellitennavigation in kürzester Zeit in den Zünder übertragen zu können, wenn die zu verschießende Munition aktuell mit einem Korrekturzünder ausgestattet ist. Dieses Hochgeschwindigkeits-Programmiergerät kann induktiv arbeiten, mit Auslegung der Übertragungsspule für besonders kurze induktive Zeitkonstanten, wenn physikalisch insoweit auf Einklang mit der induktiven Arbeitsweise des herkömmlichen Tempier-Programmiergerätes Wert gelegt wird. Das Hochgeschwindigkeits-Programmiergerät für die Übergabe der Initialisierungsdaten zur Satellitennavigation an Bord der Munition kann aber auch, wie in der WO 2004/015361 A1 anhand eines bevorzugten Realisierungsbeispiels näher beschrieben, optoelektronisch für Betrieb im sichtbaren oder unsichtbaren Spektralbereich ausgelegt sein, etwa wenn vorrangig auf Optimierung einer störbefreiten hohen Datenübertragungsrate bei hoher Entkopplung von der induktiven Tempierung Wert gelegt wird.

Jedenfalls ist das Waffensystem nun für das wahlweise Verbringen von Artilleriemunition mit konventionellem oder mit Korrektur-Zünder mit einer universellen Programmiereinrichtung ausgestattet, die einerseits die Tempierinformation mit wie bisher niedriger Datenrate induktiv überträgt oder andererseits die Initialisierungsinformation für die Satellitennavigation mit hoher Datenrate ebenfalls induktiv oder aber optoelektronisch überträgt. So ist sichergestellt, dass die Waffenanlage unbeeinträchtigt für konventionellen Munitionseinsatz weiterbenutzt werden, aber auch für moderne Bremszünder-Munition Einsatz finden kann.

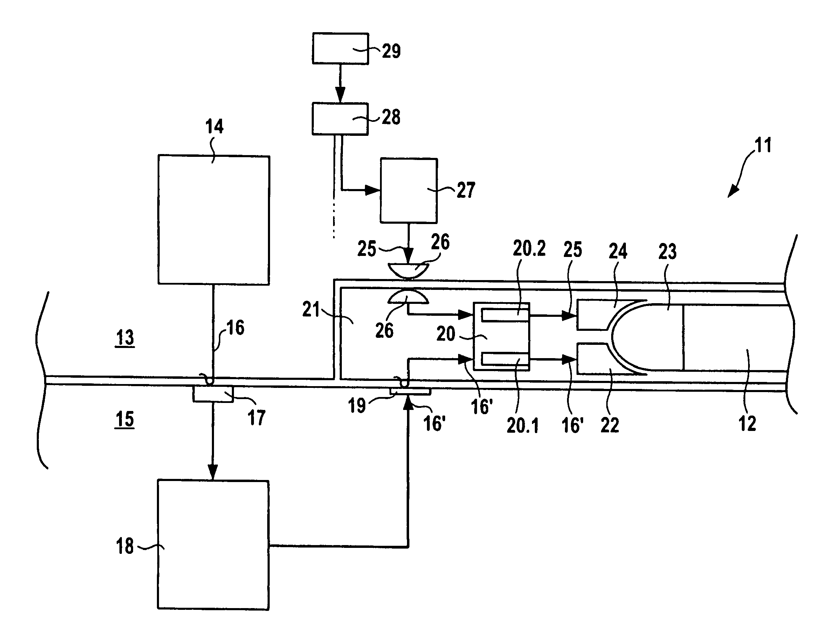

Zusätzliche Alternativen und Weiterbildungen sowie weitere Vorteile der erfindungsgemäßen Lösung und ihrer Weiterbildungen ergeben sich aus den weiteren Ansprüchen und aus nachstehender Beschreibung eines in der Zeichnung unter Beschränkung auf das Wesentliche stark abstrahiert und nicht maßstabsgerecht nach Art eines Blockschaltbildes skizzierten bevorzugten Realisierungsbeispiels zur erfindungsgemäßen Lösung. Die einzige Figur der Zeichnung zeigt in abgebrochener Skizze die Aufteilung und Unterbringung einer für konventionelles Tempieren und für Korrekturzünderfunktionen ausgelegten Programmiereinrichtung und deren apparative Verteilung auf die Bereiche zwischen Turm und Wanne einer Panzerhaubitze oder dergleichen Waffe.

Bei der eingeführten Panzerhaubitze 11 zur Verbringung großkalibriger Artilleriemunition 12 ist in dessen Turmstruktur 13 sein Feuerleitrechner 14 untergebracht. Da die Turmstruktur 13 gegenüber der Bodenwanne 15 der Haubitze 11 verdrehbar ist, werden die vom Feuerleitrechner 14 aktuell ermittelten Verbringungsdaten 16 über Schleifringe 17 an die in der Bodenwanne 15 beim Schützen untergebrachte Munitionsflusselektronik 18 übertragen. Die darin aufgrund des aktuellen Kampfgeschehens eventuell modifizierten Verbringungsdaten 16' werden wiederum über Schleifringe 19 an eine Programmiereinrichtung 20 übermittelt, die auf einer gegenüber der Bodenwanne 15 sowie gegenüber der Turmstruktur 13 verschwenkbaren Schiene 21 für den Transport- und Ladevorgang der Munition 12 angeordnet ist. Ein konventionelles Programmiergerät 20.1 in der Programmiereinrichtung 20 dient dort der Speisung eines induktiven Interface 22 zur niederfrequenten Übermittlung der Verbringungsdaten 16' in die Zündsteuerung des auf die Munition 12 aufgeschraubten Zünders 23.

Diese herkömmliche Übermittlung von Verbringungsdaten 16-16' erfolgt mit niedriger Datenrate. Deshalb ist über dieses bei der Panzerhaubitze 11 eingeführte induktive Interface 22 die hohe Datenrate nicht übertragbar, die zum schnellen Einspeisen aktueller Satellitennavigationsinformationen in einen als Bremszünder ausgelegten Zünder 23 erforderlich wäre.

Hierfür ist ein zusätzliches, wesentlich schneller ausgelegtes Hochgeschwindigkeits-Interface 24 vorgesehen, das einem Hochgeschwindigkeitsprogrammiergerät 20.2 in der Programmiereinrichtung 20 nachgeschaltet ist. Dessen Initialisierungsdaten 25 werden wegen der hohen und deshalb störempfindlicheren Datenrate vorzugsweise nicht über Schleifringe, sondern über Optokoppler 26, welche vorzugsweise im nicht sichtbaren Spektralbereich arbeiten, von einem Satelliten-Navigationsempfänger 27 in der Turmstruktur 13 an das Hochgeschwindigkeits-Programmiergerät 20.2 im Bereich der Munitions-Schiene 21 übermittelt.

Der Satelliten-Empfänger 27 zum Gewinnen aktueller Satellitendaten für das Initialisieren des Satellitenempfanges im Zünder 23 ist über eine Weiche 28 an die auf der Haubitze 11 ohnehin vorhandene Satellitenantenne 29 angeschlossen, die an sich zum Speisen eines Satellitenempfängers in der Bodenwanne 15, insbesondere in der Munitionsflusselektronik 18 dient. Der Einsatz dieses zusätzlichen Empfängers 27 zum Gewinnen der Initialisierungsdaten 25 erbringt aber den Vorteil, funktionskritische Eingriffe in die Munitionsflusselektronik 18 vermeiden und dennoch rasch aktuelle Initialisierungsdaten 25 zum Einspeisen in den Brems-Zünder 23 über das Hochgeschwindigkeitsprogrammiergerät 20.2 gewinnen zu können.

Die Funktion des eingeführten induktiven Programmiergerätes 20.1 zum Tempieren des Zünders 23 großkalibriger Munition 12 kann also ohne Eingriffe beibehalten bleiben, indem für den Fall der Ausstattung der Munition 12 mit einem Bremszünder 23 zusätzlich ein Hochgeschwindigkeits-Programmiergerät 20.2 vorgesehen ist, das Initialisierungsdaten 25 für die Satellitennavigation mit erheblich höherer Datenrate über ein Hochgeschwindigkeits-Interface 24 in den Zünder 23 überträgt. Das Interface 24 des Hochgeschwindigkeits-Programmiergerätes 20.2 kann im Interesse besonders hoher Datenraten optoelektronisch arbeiten; andererseits empfiehlt sich ein schnelles induktives Programmiergerät 20.2, um innerhalb der Programmiereinrichtung 20 für beide Programmiergeräte 20.1, 20.2 mit gleicher Technologie arbeiten zu können. Zum Gewinnen der Initialisierungsdaten 25 wird nicht auf den bordeigenen Satelliten-Navigationsempfänger zurückgegriffen, sondern an die bordeigene Antenne 29 über eine Weiche 28 ein separat betriebener Satelliten-Empfänger 27 in der Turmstruktur 13 angeschlossen.

## Patentansprüche

1. Programmiereinrichtung (20) für den Korrektur-Zünder (23) einer ArtillerieMunition (12), enthaltend ein induktives Programmiergerät (20.1) für das konventionelle Tempieren des Zünders (23) und zusätzlich ein Hochgeschwindigkeits-Programmiergerät (20.2) für das Einspeisen von Initialisierungsdaten (25) für eine Satellitennavigation an Bord des Zünders (23),
**dadurch gekennzeichnet,**
**dass** das Hochgeschwindigkeits-Programmiergerät (20.2) über einen eigenen Satelliten-Navigationsempfänger (27) und eine Weiche (28) an eine Antenne (29) angeschlossen ist, welche einen bordeigenen Satellitennavigationsempfänger speist.

2. Programmiereinrichtung nach Anspruch 1,
**dadurch gekennzeichnet,**
**dass** das Hochgeschwindigkeits-Programmiergerät (20.2) auf ein optoelektronisches Interface (24) arbeitet.

3. Programmiereinrichtung nach Anspruch 1 ,
**dadurch gekennzeichnet,**
**dass** das Hochgeschwindigkeits-Programmiergerät (20.2) auf ein induktives Interface (24) arbeitet.

4. Programmiereinrichtung nach einem der vorangehenden Ansprüche,
**dadurch gekennzeichnet,**
**dass** das Hochgeschwindigkeits-Programmiergerät (20.2) über einen Optokoppler (26) an einen Satelliten-Navigationsempfänger (27) zum Gewinnen von Initialisierungsdaten (25) angeschlossen ist.

## Claims

1. Programming device (20) for a correction fuze (23) for artillery ammunition (12) containing an inductive programmer (20.1) for conventional setting of the fuze (23), and additionally, a high-speed programmer (20.2) for feeding in initialization data (25) for the satellite navigation on board the fuze (23)
**characterized**
**in that** the high-speed programmer (20.2) is connected via a suitable satellite navigation receiver (27) and a diplexer (28) to an antenna (29) which feeds an on-board satellite navigation receiver.

2. Programming device according to Claim 1,
**characterized**
**in that** the high-speed programmer (20.2) uses an optoelectronic interface (24).

3. Programming device according to Claim 1,
**characterized**
**in that** the high-speed programmer (20.2) uses an inductive interface (24).

4. Programming device according to one of the preceding claims,
**characterized**
**in that** the high-speed programmer (20.2) is connected via an optocoupler (26) to a satellite navigation receiver (27) in order to obtain initialization data (25).

## Revendications

1. Dispositif de programmation (20) pour la fusée de correction (23) d'une munition d'artillerie (12), comprenant un appareil de programmation (20.1) inductif pour amorcer de manière conventionnelle la fusée (23) et en outre, un appareil de programmation (20.2) à grande vitesse pour l'introduction de données d'initialisation (25) en vue d'une navigation par satellite à bord de la fusée (23),
**caractérisé en ce que**
l'appareil de programmation (20.2) à grande vitesse est raccordé à une antenne (29) par le biais d'un propre récepteur (27) de navigation par satellite et d'un répartiteur (28), laquelle antenne alimente un récepteur de navigation par satellite embarqué.

2. Dispositif de programmation selon la revendication 1,
**caractérisé en ce que**
l'appareil de programmation (20.2) à grande vitesse fonctionne sur une interface (24) optoélectronique.

3. Dispositif de programmation selon la revendication 1,
**caractérisé en ce que**
l'appareil de programmation (20.2) à grande vitesse fonctionne sur une interface (24) inductive.

4. Dispositif de programmation selon l'une quelconque des revendications précédentes,
**caractérisé en ce que**
l'appareil de programmation (20.2) à grande vitesse est relié par le biais d'un optocoupleur (26) à un récepteur de navigation par satellite (27) afin d'obtenir des données d'initialisation (25).
